Europäisches Patentamt

European Patent Office

Office européen des brevets

(11) Veröffentlichungsnummer: **0 135 730 B1**

# EUROPÄISCHE PATENTSCHRIFT

(45) Veröffentlichungstag der Patentschrift: **12.06.91**

(51) Int. Cl.5: **F16C 33/10**, F16C 37/00

(21) Anmeldenummer: **84109161.4**

(22) Anmeldetag: **02.08.84**

(54) **Selbstpumpendes hydrodynamisches Gleitlager.**

(30) Priorität: **31.08.83 CH 4776/83**

(43) Veröffentlichungstag der Anmeldung:
**03.04.85 Patentblatt 85/14**

(45) Bekanntmachung des Hinweises auf die
Patenterteilung:
**12.06.91 Patentblatt 91/24**

(84) Benannte Vertragsstaaten:
**AT CH DE FR GB IT LI SE**

(56) Entgegenhaltungen:
**FR-A- 1 368 274**
**US-A- 3 966 279**
**US-A- 4 152 032**

**POWER, Band 97, Nr. 2, Februar 1953, Seiten
86-89,204,205, McGraw-Hill, New York, US;
A.E. AEBERLI et al.: "Design features of
three Canadian hydroelectric projects analyzed"**

(73) Patentinhaber: **ASEA BROWN BOVERI AG**
**Haselstrasse**
**CH-5401 Baden(CH)**

(72) Erfinder: **Fust, Armin, Dr.**
**Birchhölzliweg 10**
**CH-5412 Gebenstorf(CH)**
Erfinder: **Starcevic, Mihailo**
**Weihermatten 8**
**CH-5507 Mellingen(CH)**

**Beschreibung**

Die vorliegende Erfindung betrifft ein selbstpumpendes hydrodynamisches Gleitlager gemäss Oberbegriff des Patentanspruchs 1.

Bei hydrodynamischen Gleitlagern muss das aus den Schmierfilmen austretende Schmiermittel gekühlt werden.

Um eine leichte Zugänglichkeit für Reinigung, Reparatur etc. zu den Kühlern zu gewährleisten, werden diese vorteilhaft nicht direkt im Gehäuse des Gleitlagers untergebracht. Die aussenliegende Plazierung der Kühler bedingt jedoch, dass das Schmiermittel von der Gleitlager-Umgebung zu den Kühlern gepumpt wird. Fremdangetriebene Pumpen werden für diesen Zweck aus Zuverlässigkeitsgründen nicht immer akzeptiert.

Erst wenn die Schmiermittelförderung durch das Gleitlager selbst erzeugt und aufrechterhalten werden kann, ist der autarke, sichere Betrieb des Systems gewährleistet.

Bekannt ist, die Eigenförderung des Schmiermittels durch Ausnützung der Zentrifugalkraft des im Schmiermittelbad rotierenden Laufrings zu erzeugen.

Zu diesem Zweck werden im rotierenden Laufring radiale oder quasi-radiale Bohrungen vorgesehen. Diese Lösung zeichnet sich dadurch aus, dass die Bohrungen im Laufring die Gleitflächen Laufring/Traglagersegment und Laufring/ Führungslagersegment nicht tangieren.

Durch die Zentrifugalkraft bedingt, wird das Schmiermittel entlang der Bohrung nach aussen gefördert, wo es zentral gesammelt und der Aussenkühlung zugeleitet wird. Die zentrifugalkraftbedingte Förderung bewirkt am Eintritt in die Bohrungen eine Saugwirkung.

Ein grosser Nachteil dieser Lösung besteht aber darin, dass die Saugwirkung während des Betriebes labil bleibt, und deshalb bietet diese Förderungsart keine angemessene Gewährleistung in der Aufrechterhaltung des Förderbetriebes. Diese Ansaugung des Schmiermittels ist oftmals problematisch, da sie im Bereich des inneren Lagerdurchmessers erfolgt, dort also, wo der Flüssigkeitsspiegel durch die Rotation absinkt und oft Schaum entsteht, der sodann die fördernde Ansaugung zusammenbrechen lässt.

Aus dem Dokument "Power, band 97, Nr. 2, Februar 1953, Mc. Graw-Hill Inc., New York (US), A.E. Aeberli et al., -Design Features of Three Canadian Hydroelectric Projects Analyzed, Seiten 87-89" ist ein Gleitlager bekannt geworden, dessen Schmierung durch eine Viskositätspumpe angestrebt ist. Die hier zugrundegelegte Viskositätspumpe besteht aus einem segmentartigen Teil, der ausserhalb des Wirkungsbereiches des Gleitlagers angeordnet ist. Die einzige Funktion dieses Segmentteiles besteht also darin, das separate Gleitlager mit Schmiermittel zu versorgen. Dass das allein durch diese Viskositätspumpe bezüglich Schmiermittelversorgung keine sichergestellte Autarchie zu entfalten vermag, geht aus dem zitierten Dokument hervor, denn es ist hier immer unabdingbar eine zusätzliche konventionelle Förderpumpe vorzusehen, welche jeweils sicher bei Betriebsstart einzugreifen hat, sonst eine redundante Aufgabe zu erfüllen hat, dies bei Ausfall der Schmiermittelförderung aus dem Segmentteil über den dort vorgesehenen Pumpspalt und Schmiermittelabflusskanal.

Hier will die Erfindung Abhilfe schaffen. Der Erfindung, wie sie in den Ansprüchen gekennzeichnet ist, liegt die Aufgabe zugrunde, ein hydrodynamisches Gleitlager der eingangs genannten Art selbstschmierend und selbstpumpend zu gestalten.

Indem der stillstehende und der bewegte Bauteil des Gleitlagers in einem Schmiermittelbad eingetaucht sind, wird das Schmiermittel von der bewegten Lauffläche in den in der stillstehenden Gleitfläche ausgenommenen Pumpspalt gezogen, der in Bewegungsrichtung eine entsprechend starke Verengung durch eine Abstufung aufweist. Ein Teil des Schmiermittelstromes, der in den grossen Spalt eintritt, wird vor der Verengung durch einen dort angebrachten Schmiermittelabflusskanal abgeführt. Dieser abgezweigte Schmiermittelstrom stellt die Fördermenge des Pumpspaltes dar, der Rest strömt durch den engen Schmierspalt weiter. Demnach bedarf vorliegendes Gleitlager keiner zusätzlichen Förderpumpe mehr. Auch entfallen mithin alle Zu- und Ableitungen für die Förderung des Schmiermittels vom und zum Gleitlager.

Durch die Geometrie des Pumpspaltes kann der Pumpdruck, welcher im Pumpspalt hydrodynamisch aufgebaut wird, über eine grosse Bandweite variiert werden.

Des weiteren weist eine solche Pumpe bei höherer Viskosität des Schmiermittels keine Einbusse der Förderleistung auf, sondern - entsprechend dem höheren Druckabfall im Kühler und in den Rohrleitungen - bei zäherem Schmiermittel steigt die Pumpkapazität an.

Ein weiterer Vorteil der Erfindung besteht darin, dass die Förderung des Schmiermittels und dessen Ablauf sich ausserhalb des bewegten Bauteils abspielt, weshalb insbesondere bei rotierenden Laufringen keine Dichtungen mit Inkaufnahme zusätzlicher Reibungsverluste erforderlich sind.

Bei einer bevorzugten Ausführung der Erfindung werden die Pumpspalte in die Radial- oder Axiallagersegmente integriert.

Bei einer weiteren bevorzugten Ausführung der Erfindung werden die Pumpspalte eines Lagersegmentes oder stillstehenden Bauteils spiegelbildlich zueinander angeordnet, wodurch die Funktion der Pumpe für beide Drehrichtungen der Maschine gewährleistet ist.

Bei einer weiteren bevorzugten Ausführung der Erfindung wird der vor der Verengung des Pumpspaltes angebrachte Schmiermittelkanal in Abflussrichtung geneigt ausgebildet, wodurch der Abfluss erleichtert wird.

In der Zeichnung sind Ausführungsbeispiele der Erfindung schematisch dargestellt.

Es zeigt:

Fig. 1 ein komplettes selbstpumpendes hydrodynamisches Gleitlager, wobei es sich hier um eine vertikale Ausführung eines kombinierten Trag- und Führungslagers eines Wasserkraftgenerators handelt;

Fig. 2 ein Führungslagersegment mit eingearbeitetem Pumpspalt;

Fig. 3 die geometrische Ausführung eines Pumpspaltes.

Alle für das unmittelbare Verständnis der Erfindung nicht erforderlichen Elemente sind fortgelassen. Die Strömungsrichtung des Schmiermittels ist mit einem einfachen Pfeil, die Bewegungsrichtung der Laufteile hingegen mit einem Doppelpfeil bezeichnet. In den verschiedenen Figuren sind jeweils gleiche Elemente mit gleichen Bezugszeichen versehen.

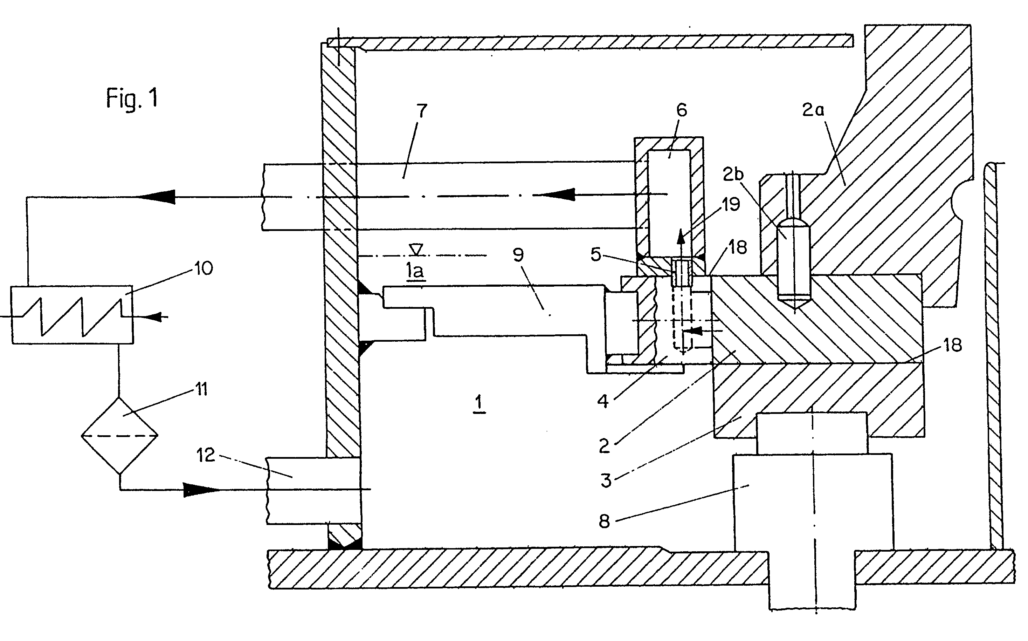

Fig. 1 zeigt ein vertikales selbstpumpendes hydrodynamisches Gleitlager 1. Der bewegte Bauteil 2, der hier ein rotierender Laufring ist, wird in Umfangsrichtung von mehreren feststehenden Traglagersegmenten 3 getragen, welche ihrerseits auf einem Support 8 verankert sind. Mit dem Laufring 2 ist mittels mehrerer Stifte 2b der Flansch 2a verbunden, wobei dieser Bestandteil des nicht dargestellten Maschinenrotors ist. Selbstverständlich können zwischen Laufring 2 und Flansch 2a auch andere Verbindungstechniken angewendet werden. Der Laufring 2 ist durch mehrere stillstehende Bauteile 4, welche hier Führungslagersegmente sind, gehalten. Das durch die einzelnen Führungslagersegmente 4 geförderte Schmiermittel 19 gelangt aus dem Segmentinneren über Verbindungsstücke 5 in den Sammelkanal 6. Von dort wird es durch eine Rohrleitung 7 zum Kühler 10 und über ein Filter 11 durch die Rohrleitung 12 zurück ins Gleitlagergehäuse 1 geleitet. Damit die Förderung des Schmiermittels 19 nicht zusammenbricht, ist es wichtig, dass das Niveau des Schmiermittelbades la mindestens über den höchsten Punkt des Schmierspaltes 18 zwischen Laufring 2 und Führungslagersegment 4 reicht. Diese Anforderung ist ohnehin für die Lagerfunktion eingehalten.

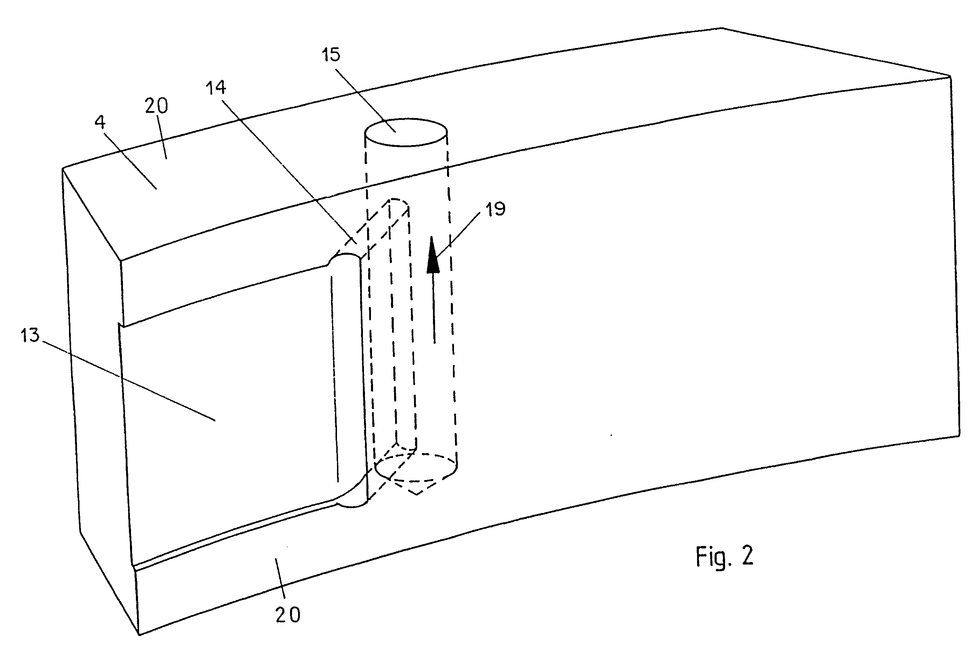

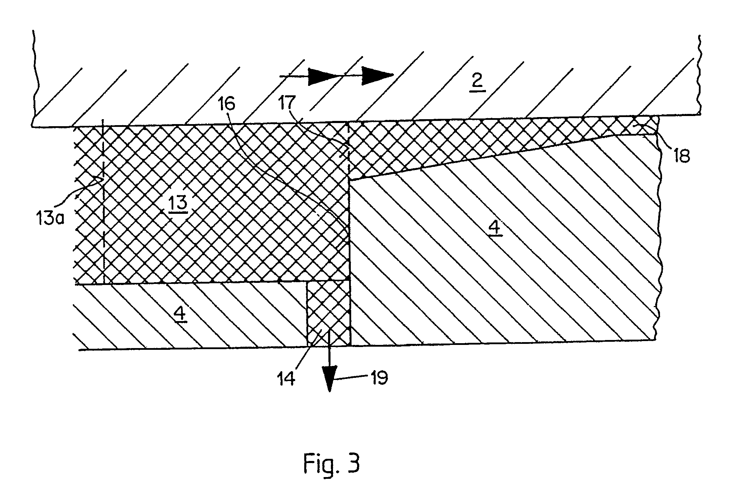

Fig. 2 zeigt ein Führungslagersegment 4 mit dem eingearbeiteten Pumpspalt 13. Das Schmiermittel wird vom Pumpspalt 13 durch einen Schmiermittelabflusskanal 14 in eine Abströmungsbohrung 15 gepumpt. Dieser Kanal 14 wird zur Ausnützung des Fluidimpulses in Abflussrichtung des Schmiermittels 19 geneigt ausgebildet. Aus der Abströmungsbohrung 15 wird das geförderte Schmiermittel 19 vom Führungslagersegment 4 weggeleitet. Der Abfluss quer zur Bewegungsrichtung ist durch seitlich angebrachte Randleisten 20 eingeschränkt, deren Abstand zum rotierenden Laufring 2 auf Schmierspalthöhe 18 (siehe Fig. 3) reduziert ist.

Der Pumpspalt 13, dessen konstruktive Gestaltung frei ist, kann auch in einem separaten Bauteil an der bewegten Gleitfläche angebracht werden, oder er kann, wie aus Fig. 2 hervorgeht, direkt in einem ohnehin vorhandenen Führungslagersegment 4 am Anfang der Gleitfläche eingearbeitet sein. Ebenso ist der Verlauf der Abstufung 16 der Pumpspalthöhe 13a in Bewegungsrichtung frei. Die Anwendung kann für beliebige Lagergeometrien erfolgen (Axiallager, Radiallager). Für zwei Drehrichtungen kann der Pumpspalt 13, samt Schmiermittelabflusskanal 14 und Abströmungsbohrung 15, auf beiden Seiten der Lauffläche des Führungslagersegmentes 4 angebracht werden.

Fig. 3 zeigt, wie die Förderwirkung an der bewegten Gleitfläche erzeugt wird. Das Schmiermittel wird von der bewegten Lauffläche des Laufringes 2 in einen Pumpspalt 13 gezogen, der in Bewegungsrichtung eine starke Verengung 17 der Pumpspalthöhe 13a durch eine Abstufung 16 aufweist. Ein Teil des Schmiermittelstromes, der in den Spalt 13 eintritt, wird vor der Verengung 17 durch einen angebrachten Schmiermittelabflusskanal 14 abgeführt. Dieser abgezweigte Schmiermittelstrom 19 stellt die Fördermenge des Pumpspaltes 13 dar, der Rest strömt durch den Schmierspalt 18 zwischen Laufring 2 und Führungslagersegment 4 weiter. Der Pumpdruck entspricht dem im Spalt 13 hydrodynamisch aufgebauten Druck und kann durch die Länge und Höhe des Pumpspaltes 13 gesteuert werden.

## Ansprüche

1. Selbstpumpendes hydrodynamisches Gleitlager, im wesentlichen bestehend aus einem bewegten Bauteil (2) und mindestens einem stillstehenden Bauteil (4), wobei das Schmiermittel für das Gleitlager durch einen in Bewegungsrichtung ausgebildeten Pumpspalt (13) und einen vor einer Verengung (17) im Pumpspalt (13) plazierten Schmiermittelabflusskanal (14) erbringbar ist, dadurch gekennzeichnet, dass der Pumpspalt (13), die Verengung (17) im Pumpspalt (13) und der vor der Verengung (17) plazierte Schmiermittelabflusskanal (14) in die tragende Gleitfläche des stillstehenden Bauteils (4) integriert sind, und dass der stillstehende Bauteil (4) in einem Schmiermittelbad (1a) eingetaucht ist.

2. Gleitlager nach Anspruch 1, dadurch gekennzeichnet, dass der Pumpspalt (13) seitlich durch Randleisten (20) abgegrenzt ist, deren Abstand zum bewegten Bauteil (2) auf Schmierspaltgrösse (18) reduziert ist.

3. Gleitlager nach Anspruch 1, dadurch gekennzeichnet, dass der stillstehende Bauteil (4) ein Lagersegment ist und der bewegte Bauteil (2) die Lauffläche des Gleitlagers ist.

4. Gleitlager nach Anspruch 1, dadurch gekennzeichnet, dass im stillstehenden Bauteil (4) zwei Pumpspalte (13) vorhanden sind, die spiegelbildlich zueinander angeordnet sind.

5. Gleitlager nach Anspruch 1, dadurch gekennzeichnet, dass der vor der Verengung (17) des Pumpspaltes (13) abzweigenden Schmiermittelabflusskanal (14) in Abflussrichtung geneigt ist.

## Claims

1. Self-pumping hydrodynamic bearing, essentially comprising a moving component (2) and at least one stationary component (4), the lubricant for the bearing being available through a pumping gap (13), formed in the direction of movement, and a lubricant discharge duct (14), positioned in front of a constriction (17) in the pumping gap (13), characterised in that the pumping gap (13), the constriction (17) in the pumping gap (13) and the lubricant discharge duct (14) positioned in front of the constriction (17) are integrated into the supporting sliding surface of the stationary component (4), and in that the stationary component (4) is immersed in a lubricant bath (1a).

2. Bearing according to Claim 1, characterised in that the pumping gap (13) is bounded laterally by edge bars (20), the interval of which from the moving component (2) is reduced to lubrication gap size (18).

3. Bearing according to Claim 1, characterised in that the stationary component (4) is a bearing segment and the moving component (2) is the bearing contact surface.

4. Bearing according to Claim 1, characterised in that two pumping gaps (13) are present in the stationary component (4) and are arranged in mutual mirror image relationship.

5. Bearing according to Claim 1, characterised in that the lubricant discharge duct (14) branching in front of the constriction (17) of the pumping gap (13) is inclined in the discharge direction.

## Revendications

1. Palier lisse hydrodynamique à autopompage, composé essentiellement d'une pièce mobile (2) et d'au moins une pièce fixe (4), dans lequel l'agent lubrifiant destiné au palier lisse peut être amené par une fente de pompage (13) ménagée dans le sens du mouvement et par un canal (14) de dérivation d'agent lubrifiant situé avant un rétrécissement (17) dans la fente de pompage (13), caractérisé en ce que la fente de pompage (13), le rétrécissement (17) dans la fente de pompage (13) et le canal (14) de dérivation d'agent lubrifiant situé avant le rétrécissement (17) sont intégrés dans la surface de glissement portante de la pièce fixe (4), et en ce que la pièce fixe (4) est plongée dans un bain d'agent lubrifiant (1a).

2. Palier lisse suivant la revendication 1, caractérisé en ce que la fente de pompage (13) est délimitée latéralement par des rebords (20), dont la distance à la pièce mobile (2) est réduite à la hauteur de la fente de lubrification (18).

3. Palier lisse suivant la revendication 1, caractérisé en ce que la pièce fixe (4) est un segment de palier et en ce que la pièce mobile (2) est la surface de contact du palier lisse.

4. Palier lisse suivant la revendication 1, caractérisé en ce qu'il est prévu dans la pièce fixe (4) deux fentes de pompage (13) qui sont disposées de manière symétrique l'une par rapport à l'autre.

5. Palier lisse suivant la revendication 1, caractérisé en ce que le canal (14) de dérivation d'agent lubrifiant s'ouvrant avant le rétrécissement (17) de la fente de pompage (13) est incliné dans le sens de l'écoulement.

Fig. 1

EP 0 135 730 B1

Fig. 2

Fig. 3